(19) Europäisches Patentamt
European Patent Office
Office européen des brevets

(11) **EP 3 381 966 B1**

(12) **EUROPEAN PATENT SPECIFICATION**

(45) Date of publication and mention
of the grant of the patent:
**05.08.2020 Bulletin 2020/32**

(51) Int Cl.:
***C08G 69/26*** *(2006.01)*     ***C08G 69/28*** *(2006.01)*

(21) Application number: **16868503.0**

(22) Date of filing: **21.11.2016**

(86) International application number:
**PCT/JP2016/084460**

(87) International publication number:
**WO 2017/090556 (01.06.2017 Gazette 2017/22)**

(54) **Polyamide resin, molded article and process for manufacturing polyamide resin**

Polyamidharz, Formgegenstand und Verfahren zur Herstellung von Polyamidharz

Résine polyamide, article moulé et procédé de fabrication d'une résine polyamide

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2015 JP 2015231865**

(43) Date of publication of application:
**03.10.2018 Bulletin 2018/40**

(73) Proprietor: **Mitsubishi Gas Chemical Company, Inc.**
**Tokyo 100-8324 (JP)**

(72) Inventors:
• **KATO Tomonori**
**Hiratsuka-shi**
**Kanagawa 254-0016 (JP)**
• **KOBAYASHI Masayuki**
**Hiratsuka-shi**
**Kanagawa 254-0016 (JP)**

(74) Representative: **Vossius & Partner**
**Patentanwälte Rechtsanwälte mbB**
**Siebertstrasse 3**
**81675 München (DE)**

(56) References cited:
WO-A1-2014/141978    WO-A1-2015/005201
WO-A1-2015/174345    JP-A- H08 319 417
JP-A- S60 238 355    JP-A- 2004 352 985
JP-A- 2014 177 548    JP-B2- 3 351 007

**Description**

TECHNICAL FIELD

The present invention relates to a polyamide resin. It also relates to molded articles using the polyamide resin, and processes for manufacturing the polyamide resin.

BACKGROUND ART

Polyamide resin synthesized from m-xylylenediamine, adipic acid and isophthalic acid have already been known (patent documents 1 and 2). Further, patent document 1 describes that sheet obtained by blending such a polyamide resin into a polyethylene terephthalate resin have a low carbon dioxide permeability coefficient. On the other hand, patent document 2 describes that such a polyamide resin has a low oxygen transmission rate.

REFERENCES

PATENT DOCUMENTS

[Patent document 1] JP-A-1985-238355
[Patent document 2] JP-A-1991-103438

SUMMARY OF THE INVENTION

PROBLEMS TO BE SOLVED BY THE INVENTION

Our investigation on patent document 1 and patent document 2 cited above revealed that the polyamide resin described in these documents have high yellowness indexes.

A possible solution to reduce the yellowness indexes is, for example, to add coloring inhibitor such as phosphorus-containing compound during the synthesis of the polyamide resin. However, our investigation revealed that the transparency may decrease depending on the type or amount of the coloring inhibitor added. The present invention aims to solve these problems, thereby providing polyamide resin having a low yellowness index and high transparency. It also aims to provide molded article using the polyamide resin, as well as process for manufacturing polyamide resin having a low yellowness index and high transparency.

MEANS TO SOLVE THE PROBLEMS

As a result of our studies to solve the problems described above, we attained the present invention on the basis of the finding that these problems can be solved by providing a polyamide resin synthesized from m-xylylenediamine, a straight chain aliphatic $\alpha,\omega$-dicarboxylic acid containing 4 to 20 carbon atoms, and isophthalic acid, which comprises phosphorus atoms in a proportion of 20 to 200 ppm by mass and calcium atoms in such a proportion that the molar ratio between the phosphorus atoms and the calcium atoms is 1:0.3 to 0.7.

Specifically, the problems described above were solved by <1>, preferably <2> to <13> below.

<1> A polyamide resin comprising a diamine-derived structural unit and a dicarboxylic acid-derived structural unit,

wherein 70 mol % or more of the diamine-derived structural unit is derived from m-xylylenediamine; and
30 to 60 mol % of the dicarboxylic acid-derived structural unit is derived from a straight chain aliphatic $\alpha,\omega$-dicarboxylic acid containing 4 to 20 carbon atoms; and
70 to 40 mol % of the dicarboxylic acid-derived structural unit is derived from isophthalic acid;

wherein the polyamide resin further comprises phosphorus atoms in a proportion of 20 to 200 ppm by mass, and calcium atoms in such a proportion that the molar ratio between the phosphorus atoms and the calcium atoms is 1:0.3 to 0.7.

<2> The polyamide resin according to <1>, having a water vapor transmission rate of 0.5 to 3.0 g·mm/m$^2$·day under the conditions of 40 °C and 90 % relative humidity.

<3> The polyamide resin according to <1> or <2>, having an oxygen transmission coefficient under the conditions of 23 °C and 60 % relative humidity ($OTC_{60}$) of 0.05 to 0.2 cc·mm/m$^2$·day·atm and an oxygen transmission coefficient under the conditions of 23 °C and 90 % relative humidity ($OTC_{90}$) in a ratio of 0.5 to 2.0 to the oxygen transmission coefficient under the conditions of 23 °C and 60 % relative humidity ($OTC_{60}$) ($OTC_{90}/OTC_{60}$).

<4> The polyamide resin according to any one of <1> to <3>, having a melting endothermic peak enthalpy of less than 5 J/g as determined by heat flux-type differential scanning calorimetry when heating to 300 °C at a rising rate of 10 °C/min.

<5> The polyamide resin according to any one of <1> to <4>, having a glass transition temperature of 110 to 150 °C.

<6> The polyamide resin according to any one of <1> to <5>, wherein 30 to 60 mol % of the dicarboxylic acid-derived structural unit is an adipic acid-derived structural unit.

<7> The polyamide resin according to any one of <1> to <6>, wherein the calcium atoms are derived from calcium hypophosphite.

<8> The polyamide resin according to any one of <1> to <7>, having a haze of 4.0 % or less after it has been formed into a molded piece having a thickness of 2 mm and immersed in water at 23 °C for 24 hours.

<9> The polyamide resin according to any one of <1> to <8>, having a yellowness index (YI value) of 10.0 or less when it is formed into a molded piece having a thickness of 2 mm.

<10> A molded article obtainable by molding a polyamide resin composition comprising the polyamide resin according to any one of <1> to <9>.

<11> A process for manufacturing a polyamide resin, comprising polycondensing a diamine and a dicarboxylic acid in the presence of calcium hypophosphite,

wherein 70 mol % or more of the diamine is m-xylylenediamine; and

30 to 60 mol % of the dicarboxylic acid-derived structural unit is derived from a straight chain aliphatic $\alpha,\omega$-dicarboxylic acid containing 4 to 20 carbon atoms; and

70 to 40 mol % of the dicarboxylic acid-derived structural unit is derived from isophthalic acid;

wherein the polyamide resin further comprises phosphorus atoms in a proportion of 20 to 200 ppm by mass, and calcium atoms in such a proportion that the molar ratio between the phosphorus atoms and the calcium atoms is 1:0.3 to 0.7.

<12> The process for manufacturing a polyamide resin according to <11>, comprising adding calcium hypophosphite in such a proportion that the concentration of phosphorus atoms contained in the polyamide resin is 20 to 200 ppm by mass.

## ADVANTAGES OF THE INVENTION

The present invention made it possible to provide polyamide resin having a low yellowness index and high transparency. The present invention also made it possible to provide molded article using the polyamide resin, as well as processes for manufacturing polyamide resins having a low yellowness index and high transparency.

## THE MOST PREFERRED EMBODIMENTS OF THE INVENTION

The present invention will be explained in detail below. As used herein, each numerical range expressed by two values on both sides of "to" is used to mean the range including the values indicated before and after "to" as lower and upper limits.

The polyamide resin of the present invention comprises a diamine-derived structural unit and a dicarboxylic acid-derived structural unit, wherein 70 mol % or more of the diamine-derived structural unit is derived from m-xylylenediamine, and 30 to 60 mol % of the dicarboxylic acid-derived structural unit is derived from a straight chain aliphatic $\alpha,\omega$-dicarboxylic acid containing 4 to 20 carbon atoms and 70 to 40 mol % of the dicarboxylic acid-derived structural unit is derived from isophthalic acid; and the polyamide resin further comprises phosphorus atoms in a proportion of 20 to 200 ppm by mass, and calcium atoms in such a proportion that the molar ratio between the phosphorus atoms and the calcium atoms is 1:0.3 to 0.7.

As described above, polyamide resin synthesized from m-xylylenediamine, a straight chain aliphatic $\alpha,\omega$-dicarboxylic acid containing 4 to 20 carbon atoms, and isophthalic acid were found to have high yellowness indexes . A possible solution to this is to add a phosphorus-containing compound as a coloring inhibitor during polycondensation. However, our investigation revealed that when the proportion of the isophthalic acid-derived structural unit in the dicarboxylic acid-derived structural unit increases to 40 mol % or more, the yellowness index is improved but the transparency may decrease when the sodium salt of hypophosphorous acid which is a typical phosphorus-containing compound is used. It was also found that when sodium hypophosphite is used, the resulting polyamide resin is transparent but the transparency drastically decreases upon immersing treatment or the like. Our investigation also revealed that when calcium hypophosphite is added as a phosphorus-containing compound, the yellowness index can be reduced and the transparency can be improved, and especially the transparency can be improved even after immersing treatment.

However, calcium salts such as calcium hypophosphite were found to be less soluble in straight chain aliphatic α,ω-dicarboxylic acids containing 4 to 20 carbon atoms or isophthalic acid so that white foreign substances are generated when the calcium salts are added in large quantities. Based on the foregoing findings, the present invention succeeded in providing polyamide resins having a low yellowness index and high transparency by selecting the proportions of phosphorus atoms and calcium atoms as defined above.

In the present invention, 70 mol % or more of the diamine-derived structural unit is derived from m-xylylenediamine. Preferably 80 mol % or more, more preferably 90 mol % or more, especially preferably 95 mol % or more, still more preferably 98 mol % or more, even more preferably 99 mol % or more of the diamine-derived structural unit is derived from m-xylylenediamine.

Examples of diamines other than m-xylylenediamine include aromatic diamines such as p-phenylenediamine, p-xylylenediamine and the like; and aliphatic diamines such as 1,3-bis(aminomethyl)cyclohexane, 1,4-bis(aminomethyl)cyclohexane, tetramethylenediamine, pentamethylenediamine, hexamethylenediamine, octamethylenediamine, nonamethylenediamine and the like. These other diamines may be used alone or as a combination of two or more of them.

In the present invention, 30 to 60 mol % of the dicarboxylic acid-derived structural unit is derived from a straight chain aliphatic α,ω-dicarboxylic acid containing 4 to 20 carbon atoms, and 70 to 40 mol % of the dicarboxylic acid-derived structural unit is derived from isophthalic acid. Among the all dicarboxylic acids forming the dicarboxylic acid-derived structural unit, the proportion of isophthalic acid is preferably at least 41 mol % or more, more preferably 43 mol % or more, still more preferably 45 mol % or more as the lower limit. The proportion of isophthalic acid is preferably at most 68 mol % or less, more preferably 66 mol % or less as the upper limit. It is preferable in such ranges because the transparency of the resulting polyamide resin tends to be improved.

Among the all dicarboxylic acids forming the dicarboxylic acid-derived structural unit, the lower limit of the proportion of the straight chain aliphatic α,ω-dicarboxylic acid containing 4 to 20 carbon atoms is preferably at least 32 mol % or more, more preferably 34 mol % or more. The upper limit of the proportion of the straight chain aliphatic dicarboxylic acid containing 4 to 20 carbon atoms is preferably at most 59 mol % or less, more preferably 57 mol % or less, still more preferably 55 mol % or less.

Examples of straight chain aliphatic α,ω-dicarboxylic acids containing 4 to 20 carbon atoms include aliphatic dicarboxylic acids such as succinic acid, glutaric acid, pimelic acid, suberic acid, azelaic acid, adipic acid, sebacic acid, undecanoic diacid, dodecanoic diacid and the like, preferably adipic acid and sebacic acid, more preferably adipic acid. The straight chain aliphatic α,ω-dicarboxylic acids containing 4 to 20 carbon atoms may be used alone or as a combination of two or more of them.

Among the all dicarboxylic acids forming the dicarboxylic acid-derived structural unit, the total proportion of isophthalic acid and the straight chain aliphatic α,ω-dicarboxylic acid containing 4 to 20 carbon atoms is preferably 90 mol % or more, more preferably 95 mol % or more, still more preferably 98 mol % or more, or may be even 100 mol %. When the proportion is selected at such levels, the resulting polyamide resin tends to have more improved transparency and a lower yellowness index.

Examples of dicarboxylic acids other than isophthalic acid and straight chain aliphatic α,ω-dicarboxylic acid containing 4 to 20 carbon atoms include terephthalic acid, 2,6-naphthalenedicarboxylic acid, alicyclic dicarboxylic acid containing 6 to 12 carbon atoms and the like. Specific examples of these include 1,4-cyclohexanedicarboxylic acid, 1,3-cyclohexanedicarboxylic acid and the like.

It should be noted that the polyamide resin of the present invention comprises a dicarboxylic acid-derived structural unit and a diamine-derived structural unit, and may further comprises structural units other than the dicarboxylic acid-derived structural unit and diamine-derived structural unit or other moieties such as end groups or the like. Examples of other structural units include, but not limited to, structural units derived from lactams such as ε-caprolactam, valerolactam, laurolactam, and undecalactam; aminocarboxylic acids such as 11-aminoundecanoic acid, and 12-aminododecanoic acid and the like. The polyamide resin of the present invention further comprises trace components such as additives and the like used for the synthesis. The polyamide resin used in the present invention typically comprise 95 % by mass or more, preferably 98 % by mass or more of a dicarboxylic acid-derived structural unit or a diamine-derived structural unit.

The polyamide resin of the present invention contains phosphorus atoms in a proportion of 20 to 200 ppm by mass, and calcium atoms in such a proportion that the molar ratio between the phosphorus atoms and the calcium atoms is 1:0.3 to 0.7.

The lower limit of concentration of phosphorus atoms in the polyamide resin of the present invention is preferably at least 22 ppm by mass or more, but may be 50 ppm by mass or more, or even 100 ppm by mass or more. The upper limit of phosphorus atoms concentration is preferably at most 190 ppm by mass or less, more preferably 180 ppm by mass or less. If the concentration of phosphorus atoms in a polyamide resin is less than the lower limit, the yellowness index of the resulting polyamide resin increases, whereby the color tone is impaired. If the concentration of phosphorus atoms in a polyamide resin is higher than the upper limit, the transparency of the resulting polyamide resin is impaired.

The molar ratio between phosphorus atoms and calcium atoms in the polyamide resin of the present invention is 1:0.3 to 0.7, more preferably 1:0.4 to 0.6, still more preferably 1:0.45 to 0.55, especially preferably 1:0.48 to 0.52. The phosphorus atoms and calcium atoms contained in the polyamide resin of the present invention are both preferably derived from calcium hypophosphite . If the molar ratio between phosphorus atoms and calcium atoms in a polyamide resin is less than the lower limit, the haze of the resulting resin is impaired. If the molar ratio between phosphorus atoms and calcium atoms in a polyamide resin exceeds the upper limit, the haze of the resulting polyamide resin is impaired.

The phosphorus atom concentration and the calcium atom concentration are measured according to the methods respectively described in the examples below. If the instruments or the like used in the examples have been discontinued, however, other instruments or the like having similar performance characteristics can be used. This also applies to the other determination methods described herein below.

The polyamide resin of the present invention preferably have a number average molecular weight of 6,000 to 30,000, more preferably 10,000 to 25,000. The number average molecular weight (Mn) of the polyamide resin can be measured by gel permeation chromatography (GPC) and expressed as a value in terms of poly (methyl methacrylate) (PMMA) . More specifically, it can be measured by using two columns packed with a styrene polymer as a filler; 2 mmol/l sodium trifluoroacetate in hexafluoroisopropanol (HFIP) as a solvent; a resin concentration of 0.02 % by mass; a column temperature of 40 °C; a flow rate of 0.3 ml/min; and detection with a refractive index detector (RI). Further, it can be estimated by referring to a calibration curve generated from six PMMA standards dissolved in HFIP.

The polyamide resin of the present invention preferably have a melting endothermic peak enthalpy of less than 5 J/g as measured by method of heat flux-type differential scanning calorimetry when heating to 300 °C at a rising rate of 10 °C/min. Those having a melting endothermic peak enthalpy of less than 5 J/g are the so-called amorphous resins. The amorphous resins do not have a definite melting point peak.

The endothermic peak enthalpy and melting point are measured according to the methods described in the examples below.

The polyamide resin of the present invention preferably has a glass transition temperature of at least 110 °C or more, more preferably 115 °C or more, still more preferably 120 °C or more as the lower limit. The upper limit of the glass transition temperature is not specifically limited, but may be, for example, 150 °C or less, or even 145 °C or less.

The glass transition temperature is measured according to the method described in the examples below.

The polyamide resin of the present invention preferably has a water vapor transmission rate of at most 3.0 $g \cdot mm/m^2 \cdot day$ or less as the upper limit, more preferably 2.5 $g \cdot mm/m^2 \cdot day$ or less under the conditions of 40 °C and 90 % relative humidity. On the other hand, the water vapor transmission rate under the conditions of 40 °C and 90 % relative humidity may be at least 0.5 $g \cdot mm/m^2 \cdot day$ or more, or even 0.7 $g \cdot mm/m^2 \cdot day$ or more as the lower limit.

The water vapor transmission rate is measured according to the method described in the examples below.

The polyamide resin of the present invention preferably has an oxygen transmission coefficient under the conditions of 23 °C and 60 % relative humidity ($OTC_{60}$) of at most 0.2 $cc \cdot mm/m^2 \cdot day \cdot atm$ or less, more preferably 0.15 $cc \cdot mm/m^2 \cdot day \cdot atm$ or less, still more preferably 0.1 $cc \cdot mm/m^2 \cdot day \cdot atm$ or less as the upper limit. On the other hand, the lower limit of $OTC_{60}$ is preferably at least 0 $cc.mm/m^2 \cdot day \cdot atm$, and if it is 0.05 $cc \cdot mm/m^2 \cdot day \cdot atom$ or more, or 0.07 $cc \cdot mm/m^2 \cdot day \cdot atm$ or more, they have practical value.

The polyamide resin of the present invention preferably has an oxygen transmission coefficient under the conditions of 23 °C and 90 % relative humidity ($OTC_{90}$) of at most 0.2 $cc \cdot mm/m^2 \cdot day \cdot atm$ or less, more preferably 0.15 $cc \cdot mm/m^2 \cdot day \cdot atm$ or less, still more preferably 0.1 $cc \cdot mm/m^2 \cdot day \cdot atm$ or less as the upper limit. On the other hand, the lower limit of the $OTC_{90}$ is preferably at least 0 $cc \cdot mm/m^2 \cdot day \cdot atm$, and may be 0.05 $cc \cdot mm/m^2 \cdot day \cdot atm$ or more, and if it is 0.07 $cc \cdot mm/m^2 \cdot day \cdot atm$ or more, they have practical value.

In the polyamide resin of the present invention, the ratio of the oxygen transmission coefficient under the conditions of 23 °C and 90 % relative humidity ($OTC_{90}$) to the oxygen transmission coefficient under the conditions of 23 °C and 60 % relative humidity ($OTC_{60}$) ($OTC_{90}/OTC_{60}$) is preferably at least 0.5 times or more, more preferably 0.7 times or more, still more preferably 0.9 times or more as the lower limit. On the other hand, the upper limit of the $OTC_{90}/OTC_{60}$ is at most 2.0 times or less, preferably 1.5 times or less, more preferably 1.2 times or less, still more preferably 1.1 times or less.

The oxygen transmission coefficient in the present invention is measured according to the method described in the examples below.

The polyamide resin of the present invention preferably has a haze of 4.0 % or less, more preferably 3.8 % or less after they have been formed into a molded piece having a thickness of 2 mm and immersed in water at 23 °C for 24 hours. The lower limit is preferably 0 %, and if it is 2.0 % or more, they have sufficient practical value.

The haze in the present invention is measured according to the method described in the examples below.

The polyamide resin of the present invention preferably has a yellowness index (YI value) of 10.0 or less, more preferably 9.0 or less, or even 8.0 or less when they are formed into a molded piece having a thickness of 2 mm. The lower limit is preferably 0, and if it is 2.5 or more, they have sufficient practical value.

The yellowness index in the present invention is measured according to the method described in the examples below.

<Processes for manufacturing the polyamide resin>

Next, an example of a process for manufacturing a polyamide resin of the present invention is described. It should be understood that the polyamide resin of the present invention are preferably polyamide resin prepared by the process described below, but are not limited to them.

A process for manufacturing a polyamide resin of the present invention comprises polycondensing a diamine and a dicarboxylic acid in the presence of calcium hypophosphite, wherein 70 mol % or more of the diamine is m-xylylenediamine, and 30 to 60 mol % and 70 to 40 mol % of the dicarboxylic acid is a straight chain aliphatic $\alpha,\omega$-dicarboxylic acid containing 4 to 20 carbon atoms and isophtalic acid; wherein the polyamide resin further comprises phosphorus atoms in a proportion of 20 to 200 ppm by mass, and calcium atoms in such a proportion that the molar ratio between the phosphorus atoms and the calcium atoms is 1:0.3 to 0.7.

In the polyamide resin thus synthesized in the presence of calcium hypophosphite, the phosphorus atom concentration can be a predetermined value, the yellowness index can be reduced, and the calcium atom concentration can be in a predetermined range,

whereby the transparency can be improved. It should be noted that calcium hypophosphite is partially or wholly converted into calcium phosphite, calcium phosphate, calcium polyphosphate or the like by oxidation during the polycondensation or a secondary processing. Further, the proportion of calcium hypophosphite converted depends on the polycondensation conditions or the oxygen concentration during the polycondensation or the like. Thus, calcium hypophosphite may not exist at all in the polyamide resin obtained by the process for manufacturing a polyamide resin of the present invention.

Polycondensation is typically melt polycondensation method, and preferably takes place by heating a melted starting dicarboxylic acid under pressure while adding dropwise a starting diamine, thereby polymerizing them while removing the condensed water; or by heating a salt composed of a starting diamine and a starting dicarboxylic acid under pressure in the presence of water, thereby polymerizing them in a melted state while removing the water added and the condensed water.

In the present invention, calcium hypophosphite is preferably added in such a proportion that the concentration of phosphorus atoms contained in the polyamide resin is 20 to 200 ppm by mass. Further, it is more preferably added in such a manner that the concentration of phosphorus atoms contained in the polyamide resin is 22 ppm by mass or more, or may be added in such a manner that the concentration is 50 ppm by mass or more, or even 100 ppm by mass or more. On the other hand, calcium hypophosphite is preferably added in such a manner that the upper limit of concentration of phosphorus atoms contained in the polyamide resin is at most 190 ppm by mass or less, more preferably 180 ppm by mass or less.

During the polycondensation, other alkali metal compounds may be added in combination with calcium hypophosphite. The amidation reaction speed can be controlled by adding an alkali metal compound. Examples of alkali metal compounds include sodium acetate. When an alkali metal compound is added, the molar ratio of the alkali metal compound/calcium hypophosphite is preferably 0.5 to 2.0.

Other polymerization conditions can be found in JP-A-2015-098669 or International Publication WO2012/140785 pamphlet.

Further, details about diamines, dicarboxylic acids and the like including preferred ranges are as described above in the explanation of polyamide resins.

<Pellet>

The polyamide resin of the present invention can be in the form of pellet. The pellet in the present invention may be pellet consisting of a polyamide resin alone or may be pellet consisting of a polyamide resin composition as described later alone. In this context, pellet consisting of a polyamide resin alone are intended to mean that they may contain catalyst or antioxidant (e.g., calcium hypophosphite or an alkali metal compound) added during the polycondensation reaction of the polyamide resin. Thus, those obtained by directly pelletizing a polyamide resin collected from the polycondensation reaction system of the polyamide resin (e.g., the polyamide resin pellets prepared in the examples described below) are also included in the pellet consisting of a polyamide resin in the present invention.

<Molded articles>

The polyamide resin of the present invention can be used as a molded article obtained by molding a polyamide resin composition comprising the polyamide resin described above. The polyamide resin composition may be solely composed of one or more kinds of the polyamide resins of the present invention, or may further contain other components.

The other components may include polyamide resin other than the polyamide resin of the present invention; thermoplastic resin other than polyamide resin; and additives such as lubricant, filler, matting agent, heat stabilizer, weather stabilizer, UV absorber, plasticizer, flame retardant, antistatic agent, coloring inhibitor, anti-gelling agent and the like, if necessary. These additives each may be used alone or as a combination of two or more kinds of them. A preferred example of an additive includes calcium stearate.

Examples of other polyamide resin specifically include polyamide 6, polyamide 66, polyamide 46, polyamide 6/66 (a copolymer made of a polyamide 6 units and a polyamide 66 units), polyamide 610, polyamide 612, polyamide 11, and polyamide 12. These other polyamide resins each may be used alone or as a combination of two or more of them.

Examples of thermoplastic resins other than polyamide resins include polyester resin such as polyethylene terephthalate, polybutylene terephthalate, polyethylene naphthalate, polybutylene naphthalate and the like. The thermoplastic resin other than polyamide resin each may be used alone or as a combination of two or more of them.

The polyamide resin composition can be used to form various molded article including film, sheet, other molded article and the like. The molded article may be thin molded article, hollow molded article or the like.

The fields for which the molded articles are applied include parts of vehicles such as automobiles, general machine parts, precision machine parts, electronic/electric equipment parts, office automation equipment parts, construction materials/housing parts, medical equipment, leisure/sports goods, play equipment, medical products, household goods such as food packaging film, containers for paints and oils, military and aerospace products and the like.

EXAMPLES

The following examples further illustrate the present invention. The materials, amounts used, proportions, process details, procedures and the like shown in the following examples can be changed as appropriate without departing from the scope of the present invention. Thus, the scope of the present invention is not limited to the specific examples shown below.

<Evaluation methods>

<<Transparency>>

Each polyamide resin pellet was dried, and the dried polyamide resin pellet was injection-molded using an injection molding machine at a molding temperature of 270 °C and a mold temperature of 90 °C to prepare a plate-like molded piece having a thickness of 2 mm. The resulting molded piece was visually observed for visible white turbidity and the presence or absence of white foreign substances.

Then, the molded piece having a thickness of 2 mm was immersed in water at 23 °C for 24 hours, and measured for haze.

The haze was determined according to JIS K-7105 using a Color & Haze Measuring Instrument (available under the brand name COH-400A from NIPPON DENSHOKU INDUSTRIES CO., LTD.). Lower haze values (expressed in %) indicate higher transparency.

<<Yellowness index (YI)>>

The yellowness index of the molded piece having a thickness of 2 mm described above was measured. The yellowness index was measured according to JIS K 7373 using a Color & Haze Measuring Instrument (available under the brand name COH-400A from NIPPON DENSHOKU INDUSTRIES CO., LTD.).

<<Oxygen transmission coefficient>>

Each dried polyamide resin pellet was melt extruded using an extrusion molding machine at 270 °C to prepare a film having a thickness of 60 pm. The resulting film was measured for the oxygen transmission coefficient at a temperature of 23 °C and a relative humidity of 60 % ($OTC_{60}$) and the oxygen transmission coefficient at a temperature of 23 °C and a relative humidity of 90 % ($OTC_{90}$) by the method described below.

The oxygen transmission rate of the molded piece were measured according to JIS K 7126-2 (ASTM D-3985) using an oxygen transmission rate testing system (OX-TRAN 2/21 from MOCON Inc.), and the oxygen transmission coefficients of the molded piece were determined by the equation below:

$$1/OTR = DFT/OTC$$

$$OTC = OTR*DFT$$

wherein OTR = oxygen transmission rate ($cc/m^2 \cdot day \cdot atm$), DFT = thickness (mm), and OTC = oxygen transmission coefficient ($cc \cdot mm/m^2 \cdot day \cdot atm$).

Further, the ratio between the oxygen transmission coefficient at a temperature of 23 °C and a relative humidity of 90 % and the oxygen transmission coefficient at a temperature of 23 °C and a relative humidity of 60 % ($OTC_{90}/OTC_{60}$) of the molded piece was determined.

<<Water vapor transmission rate>>

The film having a thickness of 60 $\mu$m described above was measured for the water vapor transmission rate at a temperature of 40 °C and a relative humidity of 90 % according to JIS K 7129A (ASTM E398) using a water vapor transmission rate testing system (PERMATRAN-W 1/50 from MOCON Inc.).

<<Melting point (Tm), endothermic peak enthalpy (HTm), and glass transition temperature (Tg)>>

The melting point, endothermic peak enthalpy and glass transition temperature were determined by heat flux-type differential scanning calorimetry when heating to 300 °C at a rising rate of 10 °C/min.

Specifically, each polyamide resin pellet was broken, and heated from a temperature of 30 °C to 300 °C at a rising rate of 10 °C/min using a differential scanning calorimeter, during which the temperature at the top of the endothermic peak was taken as the melting point and the heat capacity at this point was taken as the endothermic peak enthalpy. Polyamide resins for which a definite melting point was not observed were shown as "ND" in Table 1. The endothermic peak enthalpies in these cases were found to be certainly less than 5 J/g, and therefore shown as "<5" in Table 1.

Then, the melted sample was cooled with dry ice and heated again at a rising rate of 10 °C/min, whereby the glass transition point was measured.

In the present examples, the differential scanning calorimeter DSC-60 from SHIMADZU CORPORATION was used.

<Determination methods of the phosphorus atom concentration and calcium atom concentration>

A container made from TFM (modified PTFE) was charged with 0.2 g of each polyamide resin and 8 ml of 35 % nitric acid and subjected to microwave digestion using ETHOS One from Milestone General KK at an internal temperature of 230 °C for 30 minutes. The digest was diluted to a predetermined volume with ultrapure water to prepare a solution for ICP analysis. The phosphorus atom concentration and calcium atom concentration were determined using ICPE-9000 from SHIMADZU CORPORATION.

<Example 1>

The polyamide resin shown in Table 1 was synthesized by the following procedure.

A reaction vessel equipped with a stirrer, a partial condenser, a total condenser, a thermometer, a dropping funnel and a nitrogen inlet as well as a strand die was charged with precisely weighed 6,000 g (41.06 mol) of adipic acid, 6,821 g (41.06 mol) of isophthalic acid, 10.04 g (175 ppm as the concentration of phosphorus atoms in the polyamide resin) of calcium hypophosphite ($Ca(H_2PO_2)_2$), and 7.26 g of sodium acetate, and thoroughly purged with nitrogen and then pressurized with nitrogen to an internal pressure of 0.4 MPa and heated to 190 °C while stirring the inside of the system under a small stream of nitrogen. The molar ratio of sodium acetate/calcium hypophosphite was 1.50.

To this mixture was added dropwise 11,185g (82.12 mol) of m-xylylenediamine with stirring, and the temperature in the system was continuously raised while the condensed water generated was removed outside the system. After completion of the dropwise addition of m-xylylenediamine, the internal temperature was raised, and once it reached 265 °C, the reaction vessel was depressurized, and the internal temperature was further raised to 270 °C, at which the melt polycondensation reaction was continued for 10 minutes. Then, the inside of the system was pressurized with nitrogen, and the resulting polymer was collected from the strand die and pelletized to give about 21 kg of a polyamide resin pellet.

The resulting polyamide resin pellet was used and evaluated according to the evaluation methods described above.

<Example 2>

The polyamide resin of Example 2 was obtained in the same manner as in Example 1 except that adipic acid and isophthalic acid were added in a molar ratio of 36:64.

The resulting polyamide resin pellet was used and evaluated according to the evaluation methods described above.

<Example 3>

The polyamide resin of Example 3 was obtained in the same manner as in Example 1 except that calcium hypophosphite was added in the amount shown in Table 1.
The resulting polyamide resin pellet was used and evaluated according to the evaluation methods described above.

<Example 4>

The polyamide resin of Example 4 was obtained in the same manner as in Example 1 except that adipic acid and isophthalic acid were added in a molar ratio of 59:41.
The resulting polyamide resin pellet was used and evaluated according to the evaluation methods described above.

<Comparative example 1>

The polyamide resin of Comparative example 1 was obtained in the same manner as in Example 1 except that adipic acid and isophthalic acid were added in a molar ratio of 100:0 and that sodium hypophosphite is used as the hypophosphite salt.
The resulting polyamide resin pellet was used and evaluated according to the evaluation methods described above. It should be noted that the haze could not be determined because of white turbidity.

<Comparative example 2>

The polyamide resin of Comparative example 2 was obtained in the same manner as in Example 1 except that adipic acid and isophthalic acid were added in a molar ratio of 80:20 and that sodium hypophosphite is used as the hypophosphite salt.
The resulting polyamide resin pellet was used and evaluated according to the evaluation methods described above.

<Comparative example 3>

The same procedure as described in Example 1 was performed except that adipic acid and isophthalic acid were added in a molar ratio of 20:80. However, any polyamide resin could not be obtained because the stirring blades could not be rotated even if the dicarboxylic acids were heated to 190 °C.

<Comparative example 4>

The polyamide resin of Comparative example 4 was obtained in the same manner as in Example 1 except that sodium hypophosphite is used as the hypophosphite salt.
The resulting polyamide resin pellet was used and evaluated according to the evaluation methods described above.

<Comparative example 5>

The polyamide resin of Comparative example 5 was obtained in the same manner as in Example 1 except that calcium hypophosphite was added in the amount shown in Table 1.
The resulting polyamide resin pellet was used and evaluated according to the evaluation methods described above.

<Comparative example 6>

The polyamide resin of Comparative example 6 was obtained in the same manner as in Example 1 except that calcium hypophosphite was added in the amount shown in Table 1.
The resulting polyamide resin pellet was used and evaluated according to the evaluation methods described above.

<Comparative example 7>

The polyamide resin of Comparative example 7 was obtained in the same manner as in Example 1 except that adipic acid and isophthalic acid were added in a molar ratio of 65:35.

The resulting polyamide resin pellet was used and evaluated according to the evaluation methods described above.

[Table 1]

| | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|
| Composition of Raw Materials | MX-DA/AA/IPA | MX-DA/AA/IPA | MX-DA/AA/IPA | MX-DA/AA/IPA | MX-DA/AA/IPA | MX-DA/AA/IPA | MX-DA/AA/IPA | MX-DA/AA/IPA | MX-DA/AA/IPA | MX-DA/AA/IPA | MX-DA/AA/IPA |
| Composition Ratio of Raw materials (mol %) | 100/50/50 | 100/36/64 | 100/50/50 | 100/59/41 | 100/100/0 | 100/80/20 | 100/20/80 | 100/50/50 | 100/50/50 | 100/50/50 | 100/65/35 |
| Types of Hypophosphite | Calcium Salt | Calcium Salt | Calcium Salt | Calcium Salt | Sodium Salt | Sodium Salt | Calcium Salt | Sodium Salt | Calcium Salt | Calcium Salt | Calcium Salt |
| Addition Amount of Hypophosphite (Concentration Expressed in Terms of Phosphorus Atom, mass ppm) | 175 | 175 | 25 | 175 | 175 | 175 | 175 | 175 | 5 | 250 | 175 |
| Concentration of Phosphorus Atom in Polyamide Resin (Mass ppm) | 173.3 | 172.4 | 24.7 | 173.1 | 171.5 | 171.1 | --- | 170.6 | 4.8 | 247.2 | 172.9 |
| Mole Ratio of Calcium Atom Relative to Phosphorus Atom in Polyamide Resin | 0.5 | 0.5 | 0.5 | 0.5 | 0 | 0 | 0.5 | 0 | 0.5 | 0.5 | 0.5 |
| Transparency Evaluated by Visual Observation | Transparent | Transparent | Transparent | Transparent | Clouded By Crystallization | Translucent | --- | Transparent | Transparent | White Foreign Matter is present | Transparent |

(continued)

| | | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|
| Haze After Soaking Treatment of 23°C, 24hours (%) | | 3.6 | 3.4 | 2.4 | 3.5 | --- | 25.2 | Synthesis Impossible | 14.1 | 3.2 | 3.3 | 6.1 |
| YI | | 3.8 | 4.5 | 8.5 | 3.9 | 1.5 | 2.6 | | 3.7 | 59.5 | 7.2 | 3.1 |
| Oxygen Permeability Coefficient (cc·mm/m²·day·atm) | $OTC_{60}$ | 0.085 | 0.096 | 0.085 | 0.080 | 0.084 | 0.070 | | 0.085 | 0.085 | 0.085 | 0.075 |
| | $OTC_{90}$ | 0.092 | 0.094 | 0.092 | 0.106 | 0.4 | 0.3 | | 0.092 | 0.092 | 0.092 | 0.152 |
| | $OTC_{90}/OTC_{60}$ | 1.08 | 0.98 | 1.08 | 1.33 | 4.8 | 4.3 | | 1.08 | 1.08 | 1.08 | 2.03 |
| Water Vapor Transmission Ratio (g·mm/m²·day) | | 1.3 | 0.8 | 1.3 | 2.6 | 2.4 | 2.0 | | 1.3 | 1.3 | 1.3 | 3.3 |
| Tm (°C) | | ND | ND | ND | ND | 238 | 207 | | ND | ND | ND | ND |
| HTm (J/g) | | <5 | <5 | <5 | <5 | 47.1 | 10.5 | | <5 | <5 | <5 | <5 |
| Tg (°C) | | 127 | 140 | 127 | 119 | 88 | 101 | | 127 | 127 | 127 | 115 |

As seen from the results shown above, the polyamide resins of the present invention were shown to have high transparency and low yellowness indexes.

However, samples using a sodium salt as a hypophosphite salt (Comparative examples 1, 2, and 4) showed low yellowness indexes, but turned cloudy due to crystallization or showed high haze after immersion in water.

Further, any polyamide resin could not be obtained when the proportion of isophthalic acid exceeds 70 mol % of the dicarboxylic acid components (Comparative example 3).

On the other hand, the yellowness index increased when the phosphorus atom concentration was below the range defined herein (Comparative example 5). When the phosphorus atom concentration exceeds the range defined herein (Comparative example 6), however, the transparency decreased because white foreign substances were generated.

## Claims

1. A polyamide resin comprising a diamine-derived structural unit and a dicarboxylic acid-derived structural unit, wherein 70 mol% or more of the diamine-derived structural unit is derived from m-xylylenediamine; and 30 to 60 mol% of the dicarboxylic acid-derived structural unit is derived from a straight chain aliphatic $\alpha,\omega$-dicarboxylic acid containing 4 to 20 carbon atoms; and 70 to 40 mol% of the dicarboxylic acid-derived structural unit is derived from isophthalic acid; wherein the polyamide resin further comprises phosphorus atoms in a proportion of 20 to 200 ppm by mass, and calcium atoms in such a proportion that the molar ratio between the phosphorus atoms and the calcium atoms is 1:0.3 to 0.7.

2. The polyamide resin according to claim 1, having a melting endothermic peak enthalpy of less than 5 J/g as determined by heat flux-type differential scanning calorimetry when heating to 300 °C at a rising rate of 10 °C/min.

3. The polyamide resin according to claim 1 or 2, having a glass transition temperature of 110 to 150 °C.

4. The polyamide resin according to any one of claims 1 to 3, wherein 30 to 60 mol% of the dicarboxylic acid-derived structural unit is an adipic acid-derived structural unit.

5. The polyamide resin according to any one of claims 1 to 4, wherein the calcium atoms are derived from calcium hypophosphite.

6. A molded article obtainable by molding a polyamide resin composition comprising the polyamide resin according to any one of claims 1 to 5.

7. A process for manufacturing a polyamide resin, comprising polycondensing a diamine and a dicarboxylic acid in the presence of calcium hypophosphite, wherein 70 mol % or more of the diamine is m-xylylenediamine; and 30 to 60 mol % of the dicarboxylic acid-derived structural unit is derived from a straight chain aliphatic $\alpha,\omega$-dicarboxylic acid containing 4 to 20 carbon atoms; and 70 to 40 mol % of the dicarboxylic acid-derived structural unit is derived from isophthalic acid; wherein the polyamide resin further comprises phosphorus atoms in a proportion of 20 to 200 ppm by mass, and calcium atoms in such a proportion that the molar ratio between the phosphorus atoms and the calcium atoms is 1:0.3 to 0.7.

8. The process for manufacturing a polyamide resin according to claim 7, comprising adding calcium hypophosphite in such a proportion that the concentration of phosphorus atoms contained in the polyamide resin is 20 to 200 ppm by mass.

## Patentansprüche

1. Ein Polyamidharz, umfassend eine von Diamin abgeleitete Struktureinheit und eine von Dicarbonsäure abgeleitete Struktureinheit, wobei 70 Mol-% oder mehr der von Diamin abgeleiteten Struktureinheit von m-Xylylendiamin abgeleitet sind; und 30 bis 60 Mol-% der von Dicarbonsäure abgeleiteten Struktureinheit von einer geradkettigen aliphatischen $\alpha,\omega$-

Dicarbonsäure, enthaltend 4 bis 20 Kohlenstoffatome, abgeleitet sind; und
70 bis 40 Mol-% der von Dicarbonsäure abgeleiteten Struktureinheit von Isophthalsäure abgeleitet sind;
wobei das Polyamidharz ferner Phosphoratome in einem Anteil von 20 bis 200 Massen-ppm und Calciumatome in einem solchen Anteil, dass das Molverhältnis zwischen den Phosphoratomen und den Calciumatomen 1:0,3 bis 0,7 beträgt, umfasst.

2. Das Polyamidharz gemäß Anspruch 1, welches einen endothermen Schmelzenthalpie - Peak von weniger als 5 J/g, gemessen mittels Differentialscanningkalorimetrie vom Wärmefluss-Typ bei Erwärmung auf 300 °C mit einer Anstiegsrate von 10 °C/min, aufweist.

3. Das Polyamidharz gemäß Anspruch 1 oder 2 mit einer Glasübergangstemperatur von 110 bis 150 °C.

4. Das Polyamidharz gemäß einem der Ansprüche 1 bis 3, wobei 30 bis 60 Mol-% der von Dicarbonsäure abgeleiteten Struktureinheit eine von Adipinsäure abgeleitete Struktureinheit sind.

5. Das Polyamidharz gemäß einem der Ansprüche 1 bis 4, wobei die Calciumatome von Calciumhypophosphit abgeleitet sind.

6. Ein Formgegenstand, erhältlich durch Formen einer Polyamidharzzusammensetzung, umfassend das Polyamidharz gemäß einem der Ansprüche 1 bis 5.

7. Ein Verfahren zur Herstellung eines Polyamidharzes, umfassend das Polykondensieren eines Diamins und einer Dicarbonsäure in Gegenwart von Calciumhypophosphit, wobei 70 Mol-% oder mehr des Diamins m-Xylylendiamin sind; und
30 bis 60 Mol-% der von Dicarbonsäure abgeleiteten Struktureinheit von einer geradkettigen aliphatischen $\alpha,\omega$-Dicarbonsäure, enthaltend 4 bis 20 Kohlenstoffatome, abgeleitet sind; und
70 bis 40 Mol-% der von Dicarbonsäure abgeleiteten Struktureinheit von Isophthalsäure abgeleitet sind;
wobei das Polyamidharz ferner Phosphoratome in einem Anteil von 20 bis 200 Massen-ppm und Calciumatome in einem solchen Anteil, dass das Molverhältnis zwischen den Phosphoratomen und den Calciumatomen 1:0,3 bis 0,7 beträgt, umfasst.

8. Das Verfahren zur Herstellung eines Polyamidharzes gemäß Anspruch 7, umfassend die Zugabe von Calciumhypophosphit in einem solchen Anteil, dass die Konzentration von Phosphoratomen, welche in dem Polyamidharz enthalten sind, 20 bis 200 Massen-ppm beträgt.

## Revendications

1. Résine de polyamide comprenant un motif structurel dérivé de diamine et un motif structurel dérivé d'acide dicarboxylique,
dans laquelle 70 % en moles ou plus du motif structurel dérivé de diamine dérivent de m-xylylènediamine ; et
30 à 60 % en moles du motif structurel dérivé d'acide dicarboxylique dérivent d'un acide $\alpha,\omega$-dicarboxylique aliphatique à chaîne droite contenant 4 à 20 atomes de carbone ; et
70 à 40 % en moles du motif structurel dérivé d'acide dicarboxylique dérivent d'acide isophtalique ;
dans laquelle la résine de polyamide comprend en outre des atomes de phosphore en une proportion de 20 à 200 ppm en masse, et des atomes de calcium en une proportion telle que le rapport molaire entre les atomes de phosphore et les atomes de calcium soit de 1:0,3 à 0,7.

2. Résine de polyamide selon la revendication 1, ayant une enthalpie de pic endothermique de fusion inférieure à 5 J/g, telle que déterminée par calorimétrie différentielle à balayage du type à flux de chaleur lors d'un chauffage à 300 °C à une vitesse de montée en température de 10 °C/min.

3. Résine de polyamide selon la revendication 1 ou 2, ayant une température de transition vitreuse de 110 à 150 °C.

4. Résine de polyamide selon l'une quelconque des revendications 1 à 3, dans laquelle 30 à 60 % en moles du motif structurel dérivé d'acide dicarboxylique sont constitués d'un motif structurel dérivé d'acide adipique.

5. Résine de polyamide selon l'une quelconque des revendications 1 à 4, dans laquelle les atomes de calcium dérivent d'hypophosphite de calcium.

6. Article moulé pouvant être obtenu par moulage d'une composition de résine de polyamide comprenant la résine de polyamide selon l'une quelconque des revendications 1 à 5.

7. Procédé pour fabriquer une résine de polyamide, comprenant la polycondensation d'une diamine et d'un acide dicarboxylique en présence d'hypophosphite de calcium,
   dans lequel 70 % en moles ou plus de la diamine sont constitués de m-xylylènediamine ; et
   30 à 60 % en moles du motif structurel dérivé d'acide dicarboxylique dérivent d'un acide $\alpha,\omega$-dicarboxylique aliphatique à chaîne droite contenant 4 à 20 atomes de carbone ; et
   70 à 40 % en moles du motif structurel dérivé d'acide dicarboxylique dérivent d'acide isophtalique ;
   dans lequel la résine de polyamide comprend en outre des atomes de phosphore en une proportion de 20 à 200 ppm en masse, et des atomes de calcium en une proportion telle que le rapport molaire entre les atomes de phosphore et les atomes de calcium soit de 1:0,3 à 0,7.

8. Procédé pour fabriquer une résine de polyamide selon la revendication 7, comprenant l'addition d'hypophosphite de calcium en une proportion telle que la concentration des atomes de phosphore contenus dans la résine de polyamide soit de 20 à 200 ppm en masse.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60238355 A
- JP 3103438 A
- JP 2015098669 A
- WO 2012140785 A